# EUROPEAN PATENT SPECIFICATION

(11) **EP 1 801 371 B1**
(45) Date of publication and mention of the grant of the patent: **08.08.2012**
(21) Application number: 05795221.0
(22) Date of filing: 12.10.2005
(51) Int. Cl.: F01N 3/02, B01D 53/94, B01D 46/42, F01N 9/00, F01N 3/022, F01N 3/023, F01N 3/025, F02D 41/02

(54) **INTERNAL COMBUSTION ENGINE EXHAUST CLEANER**
ABGASREINIGER FÜR VERBRENNUNGSMOTOR
PURIFICATEUR DE GAZ D'ECHAPPEMENT DE MOTEUR A COMBUSTION INTERNE

(30) Priority: 12.10.2004 JP 2004297995
(43) Date of publication of application: 27.06.2007
(73) Proprietor: TOYOTA JIDOSHA KABUSHIKI KAISHA, Toyota-shi, Aichi 471-8571 (JP)
(72) Inventor: HASHIZUME, Takeshi, Toyota-shi, Aichi 4718571 (JP)
(74) Representative: TBK
(86) International application number: PCT/JP2005/019152
(87) International publication number: WO 2006/041187

(56) References cited:
- JP-A- 5 044 440
- JP-A- 6 288 220
- JP-A- 6 307 226
- JP-A- 8 177 463
- JP-A- 11 343 831
- JP-A- 2001 098 928
- JP-A- 2003 166 412
- US-A1- 2004 035 101
- US-A1- 2004 172 933

## Description

### TECHNICAL FIELD

The present invention relates to an exhaust gas purification apparatus for an internal combustion engine according to the preamble of claim 1, the features of which are known from document US 2004/305 101 A1.

### BACKROUND ART

In recent years, as exhaust gas purification apparatuses for an internal combustion engine mounted on a vehicle, apparatuses equipped with a particulate filter have become popular. The amount of the particulate matter (which will be referred to as PM hereinafter) that the particulate filter can trap is limited, and it is needed to perform a forced particulate filter regeneration process to oxidize and remove the PM trapped in the particulate filter by raising the temperature of the particulate filter to a target filter temperature

To meet the above described requirement, Japanese Patent Publication No. 5-50571 discloses a technology in which the amount of the PM trapped in the particulate filter is successively estimated, and when the estimated value becomes equal to or larger than an upper limit amount, the forced particulate filter regeneration process is started, while when the estimated value becomes equal to or smaller than a lower limit amount, the forced particulate filter regeneration process is ended.

Japanese Patent No. 3199970 discloses a technology in which the larger the amount of the PM trapped in the particulate filter is, the larger the temperature rise of the particulate filter in the forced particulate filter regeneration process is made.

Japanese Patent Application Laid-Open No. 2003-166412 discloses the discovery that the PM deposited inside partition walls that constitute the particulate filter is easily oxidized.

Japanese Patent No. 2623879 discloses a method in which the PM trap amount of the particulate filter is calculated taking into consideration spontaneous combustion of the PM.

### DISCLOSURE OF THE INVENTION

The PM oxidation rate sometimes differs among regions in the particulate filter. However, the above mentioned prior arts do not take into account such differences in the PM oxidation rate among regions in the particulate filter in performing the forced particulate filter regeneration process, and therefore there is a possibility that an inappropriate target filter temperature is set in the forced particulate filter regeneration process and the forced particulate filter regeneration process is executed at inappropriate time.

The present invention has been made in view of the above-described problem and has as an object to provide a technology that enables to perform appropriate forced particulate filter regeneration process in accordance with the oxidation rate of the PM trapped in the particulate filter.

To achieve the above described object, the present invention provides the following solution. The present invention is characterized in that in an exhaust gas purification apparatus for an internal combustion engine that forcedly oxidizes and removes the PM trapped in a particulate filter by performing a forced particulate filter regeneration process to raise the temperature of the particulate filter, the amount of the PM trapped in the particulate filter is determined on a region-by-region basis for regions having different oxidation rates, and the target filter temperature in the forced particulate filter regeneration process and the time for executing it are changed in accordance with the PM trap amounts in the respective regions.

For example, according to the present invention, in an exhaust gas purification apparatus for an internal combustion engine in which a forced particulate filter regeneration process for increasing the temperature of the particulate filter to a target filter temperature is performed at predetermined time intervals, trap amount calculation means for calculating the amount of the PM trapped in said particulate filter on a region-by-region basis for regions having different particulate oxidation rates may be provided, and the larger the trap amount in a region in which the oxidation rate is high (which region will be hereinafter referred to as the high oxidation rate region) is and the smaller the trap amount in a region in which the oxidation rate is low (which region will be hereinafter referred to as the low oxidation rate region) is at the time of starting execution of said forced particulate filter regeneration process, the lower the target filter temperature in executing the forced PM regeneration process may be made.

The exhaust gas purification apparatus for an internal combustion engine constructed as above executes the forced particulate filter regeneration at predetermined time intervals. The larger the PM trap amount in the high oxidation rate region is and the smaller the PM trap amount in the low oxidation rate region is at the time when the forced particulate filter regeneration process is started, the lower the target filter temperature in the forced particulate filter regeneration is made.

The PM trapped in the high oxidation rate region is oxidized at a lower temperature as compared to the PM trapped in the low oxidation rate region. For this reason, when the PM trap amount in the high oxidation rate region is large and the PM trap amount in the low oxidation rate region is small, the most part of the PM trapped in the particulate filter can be oxidized even if the target filter temperature in executing the forced particulate filter regeneration process is made low. As a result, the PM trapping capacity of the particulate filter can be regenerated to a necessary and sufficient degree.

If the target filter temperature in executing the forced particulate filter regeneration process is made low, the particulate filter is not exposed to high temperatures, and therefore it is possible to extend the usable life of the particulate filter. In addition, if the target filter temperature in executing the forced particulate filter regeneration process is made lower, the energy required for raising the temperature of the particulate filter to the target filter temperature becomes smaller, and therefore it is possible to improve the fuel economy of the internal combustion engine.

Thus, it is possible to extend the usable life of the particulate filter and to improve the fuel economy of the internal combustion engine while suppressing a decrease in the efficiency of regeneration of the particulate filter.

On the other hand, when the PM trap amount in the high oxidation rate region is small and the PM trap amount in the low oxidation rate region is large at the time when the forced particulate filter regeneration process is started, the target filter temperature in executing the force particulate filter regeneration process is made high. In this case, the PM trapped in the low oxidation rate region as well as the PM trapped in the high oxidation rate region can be oxidized. Consequently, when the target filter temperature is made high, the PM trapping capacity of the particulate filter is regenerated excellently.

According to the exhaust gas purification apparatus for an internal combustion engine of the present invention, by determining the amount of the PM trapped in the particulate filter on a region-by-region basis for regions having different PM oxidation rates and changing the way of executing the forced particulate filter regeneration process in accordance with the PM trap amounts in the respective regions, it is possible to regenerate the PM trapping capacity of the particulate filter while suppressing a decrease in the usable life of the particulate filter caused by the forced particulate filter regeneration process and a decrease in the fuel economy of the internal combustion engine.

In connection with the above, when the trap amount in the low oxidation rate region is rather large, the target filter temperature may be made higher regardless of the trap amount in the high oxidation rate region. For example, when the trap amount in the low oxidation rate region is zero at the time when execution of the forced particulate filter regeneration process is started, the target filter temperature may be made as low as a temperature at which the PM in the high oxidation rate region can be oxidized, and when the trap amount in the low oxidation rate region is larger than zero, the target filter temperature may be made as high as a temperature at which the PM in the low oxidation rate region can be oxidized.

This is because if the target temperature in executing the forced particulate filter regeneration process is made low when the trap amount in the low oxidation rate region is rather large, a relatively large amount of the PM trapped in the low oxidation rate region will remain without being oxidized.

According to the present invention, in an exhaust gas purification apparatus for an internal combustion engine in which the forced particulate filter regeneration process is performed when the PM trap amount exceeds a predetermined amount, there may be provided trap amount calculation means for calculating the amount of the particulate trapped in the particulate filter on a region-by-region basis for regions having different PM oxidation rates, first regeneration means that performs a first forced particulate filter regeneration process to raise the temperature of said particulate filter to a first target filter temperature when the PM trap amount in the high oxidation rate region exceeds a first predetermined amount, and second regeneration means that performs a second forced particulate filter regeneration process to raise the temperature of said particulate filter to a second target filter temperature that is higher than the first target filter temperature when the PM trap amount in the low oxidation rate region exceeds a second predetermined amount.

In the exhaust gas purification apparatus for an internal combustion engine constructed as above, when the PM trap amount in the high oxidation rate region exceeds the first predetermined amount before the PM trap amount in the low oxidation rate region exceeds the second predetermined amount, the first forced particulate filter regeneration process is executed by the first regeneration means. On the other hand, when the PM trap amount in the low oxidation rate region exceeds the second predetermined amount before the PM trap amount in the high oxidation rate region exceeds the first predetermined amount, the second forced PM regeneration process is executed by the second regeneration means.

When the second forced PM regeneration process is executed, it is possible to oxidize the PM trapped in the low oxidation rate region, since the temperature of the particulate filter is raised up into a relatively high temperature region.

When the first forced particulate filter regeneration process is executed, it is possible to oxidize the PM trapped in the high oxidation rate region without exposing the particulate filter to high temperatures, since the temperature of the particulate filter can be made lower than that in the second particulate filter regeneration process.

Therefore, by changing the target filter temperature in the forced particulate filter regeneration and the time for executing the forced particulate filter regeneration process in accordance with the PM trap amounts in the respective regions in the particulate filter having difference PM oxidation rates, it is possible to regenerate the PM trapping capacity of the particulate filter while reducing the chances of exposure of the particulate filter to high temperatures.

Here, the second predetermined amount may be set smaller than the first predetermined amount. If the second predetermined amount is set smaller than the first predetermined amount, the possibility that the first particulate filter regeneration process is executed at a time when the PM trap amount in the low oxidation rate region is relatively large becomes low. Consequently, it is possible to suppress a decrease in the efficiency of regeneration of the particulate filter.

In the case where the trap amount in the high oxidation rate region is reduced in calculation by the trap amount calculation means in the present invention, the reduction amount may be made larger than that in the reduction in calculation of the trap amount in the low oxidation rate region. This is because the PM trapped in the high oxidation rate region is oxidized at lower temperatures and at a higher oxidation speed as compared to the PM trapped in the low oxidation rate region.

The particulate filter according to the present invention may be, for example, a particulate filter made of a porous material. In this case, the region in which the oxidation rate is high is the interior of pores and the surface of the base member in the neighborhood of the pores, and the region in which the oxidation rate is low is the surface of the base member other than the neighborhood of the pores.

### BRIEF DESCRIPTION OF THE DRAWINGS

Fig. 1 is a diagram schematically showing the structure of an internal combustion engine to which the present invention is applied.
Fig. 2 is an enlarged cross sectional view showing the structure of a particulate filter.
Fig. 3 shows the oxidation state of the PM trapped in the particulate filter.
Fig. 4 shows the relationship between the pressure difference across the filter and the PM trap amount of the entire particulate filter.
Fig. 5 is a flow chart of a PM trap amount calculation routine in a first embodiment.
Fig. 6 is a flow chart of a target filter temperature setting routine in the first embodiment.
Fig. 7 is a flow chart of a target filter temperature setting routine in a second embodiment.

In the following specific embodiments of the exhaust gas purification apparatus for an internal combustion engine according to the present invention will be described with reference to the drawings.

### (First Embodiment)

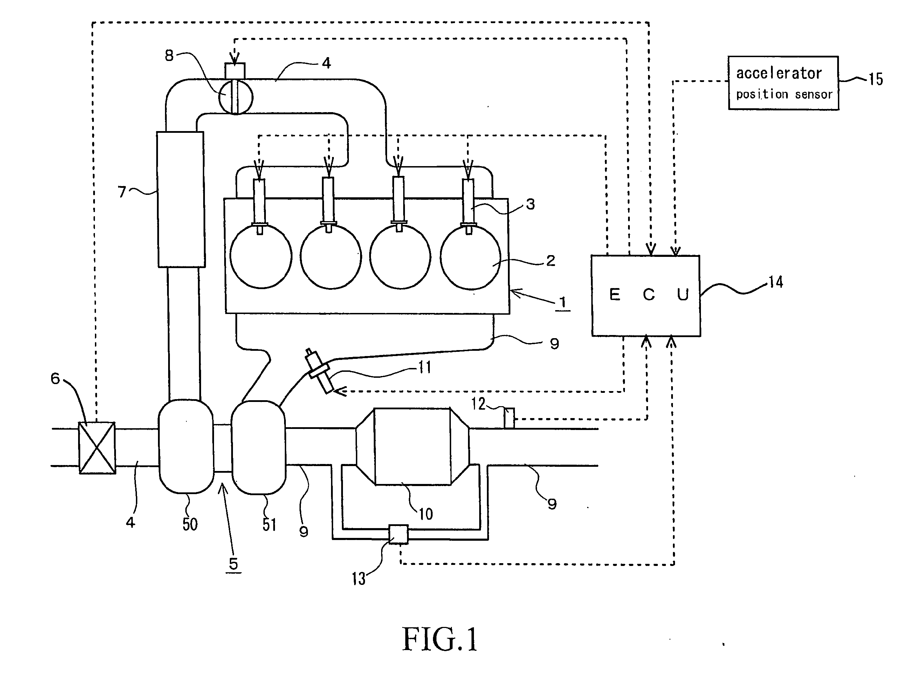

A first embodiment of the present invention will be firstly described with reference to Figs. 1 to 6. Fig. 1 is a diagram showing the basic structure of an internal combustion engine to which the present invention is applied.

In Fig. 1, the internal combustion engine 1 is a compression ignition internal combustion engine that is operated using light oil as fuel (i.e. a diesel engine). The internal combustion engine 1 has a plurality of cylinders 2. For each cylinder 2 is provided a fuel injection valve 3 that injects fuel directly into the cylinder 2.

The internal combustion engine 1 is connected with an intake passage 4. A compressor housing 50 of a centrifugal supercharger (or a turbocharger) 5 is provided in the intake passage 4. An air flow meter 6 is provided in the intake passage 4 upstream of the compressor housing 50. An intake air cooler (intercooler) 7 is provided in the intake passage 4 downstream of the compressor housing 50. An intake throttle valve 8 is provided in the intake passage 4 downstream of the intercooler 7.

The internal combustion engine 1 is also connected with an exhaust passage 9. A turbine housing 51 of the turbocharger 5 is provided in the exhaust passage 9. A particulate filter 10 is provided in the exhaust passage 9 downstream of the turbine housing 51.

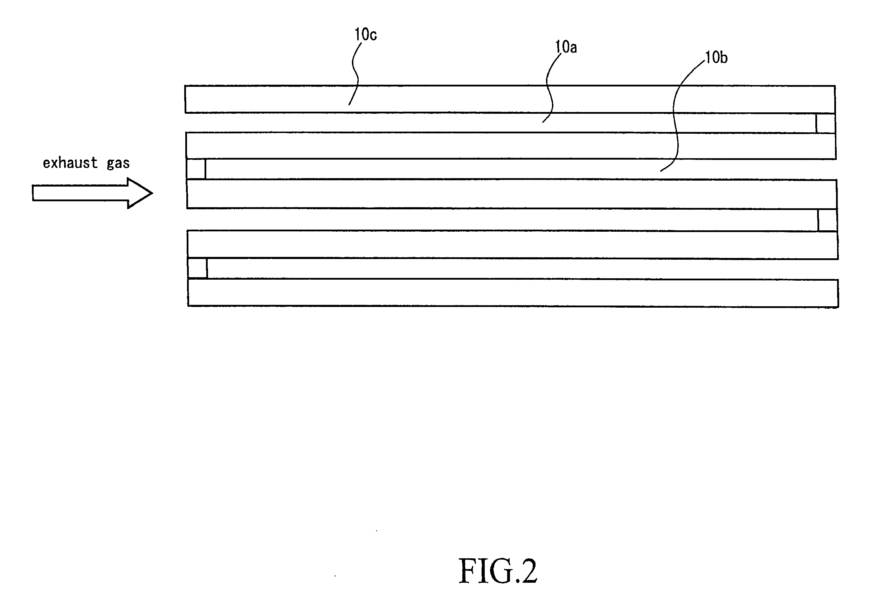

As shown in Fig. 2, the particulate filter 10 is a wall-flow type particulate filter in which flow passages 10a that are closed at their downstream ends and flow passages 10b that are closed at their upstream ends are alternately arranged, the partition walls of the flow passages 10a and 10b being made of a porous base member. A catalyst having an oxidizing ability is supported on the aforementioned base member.

Referring back to Fig.1, a fuel addition valve 11 for adding fuel into the exhaust gas flowing through the exhaust passage 9 is provided in the exhaust passage 9 upstream of the turbine housing 51. An exhaust gas temperature sensor 12 is provided in the exhaust passage 9 downstream of the particulate filter 10. In addition, a pressure difference sensor 13 that detects the pressure difference between the exhaust gas pressure in the upstream of the particulate filter 10 and the exhaust gas pressure in the downstream thereof (which pressure will be hereinafter referred to as the pressure difference across the filter) is provided in the exhaust passage 9.

To the internal combustion engine 1 having the above described structure is annexed an ECU 14. The ECU 14 is an arithmetic logic circuit composed of a CPU, a ROM, a RAM and a backup RAM etc..

The ECU 14 is electrically connected with various sensors such as the above mentioned air flow meter 6, exhaust gas temperature sensor 12, pressure difference sensor 13. The ECU 14 is also electrically connected with the fuel injection valve 3, the intake throttle valve 8 and the fuel addition valve 11 etc..

In the internal combustion engine 1 having the above described structure, the ECU 14 executes a particulate filter regeneration control that constitutes the essence of the present invention as well as known controls such as fuel injection control etc..

In the PM regeneration control, the ECU 14 makes a determination as to whether or not a condition for executing the forced particulate filter regeneration process is satisfied. In this embodiment, the condition for executing the forced particulate filter regeneration process may be, for example, that the time elapsed since the latest execution of the forced particulate filter regeneration process is equal to or longer than a predetermined time or that the distance over which the vehicle has traveled since the latest execution of the forced PM regeneration process is equal to or longer than a predetermined distance.

When it is determined by the ECU 14 that the condition for executing the forced particulate filter regeneration process as described above is satisfied, the ECU 14 executes the forced particulate filter regeneration process. In the forced PM regeneration process, the ECU 14 reduces the degree of opening of the intake throttle valve 8, and adds fuel into the exhaust gas through the fuel addition valve 11 to raise the temperature of the particulate filter 10 up into the temperature range in which the PM can be oxidized. When the temperature of the particulate filter 10 has been raised up into the temperature range in which the PM can be oxidized, the PM that has been trapped in the particulate filter 10 is oxidized and removed.

The oxidation rate of the PM trapped in the particulate filter 10 varies depending on the trapped region. For example, the PM oxidation rate is high in the interior of the fine pores 10d of the particulate filter 10 or in the region in the neighborhood of the fine pores 10d, while the PM oxidation rate is low in the region distant from the fine pores 10d (i.e. region near the center in the flow passages 10a, 10b).

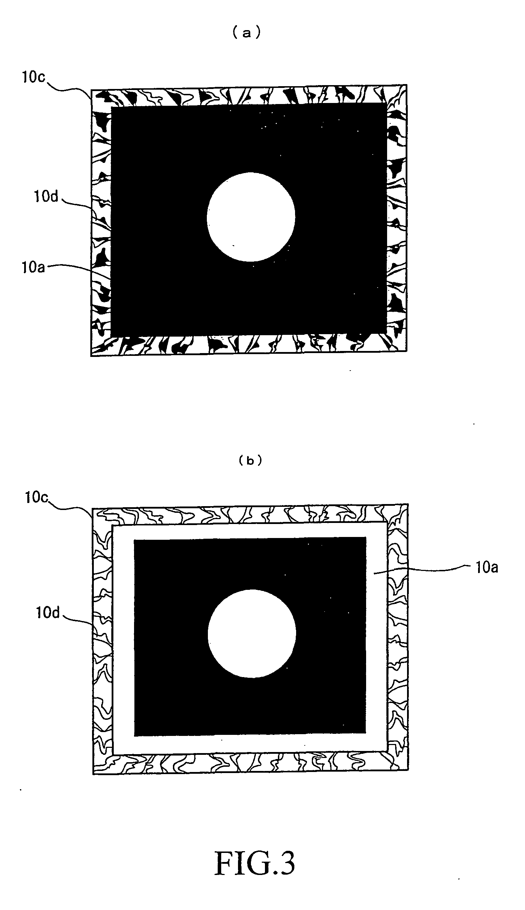

In the following, the oxidization state of the PM trapped in the particulate filter 10 will be discussed with reference to Fig. 3. Fig. 3(a) shows the state of the flow passage 10a just before the PM trapping capacity of the particulate filter 10 is filled. The solid black portion in Fig. 3(b) represents the trapped PM. In this case, the PM is trapped in the fine pores 10d and deposited on the surface of the partition wall 10c (in the flow passage 10a).

Fig. 3(b) shows the state of the flow passage 10a at a relatively early stage after the forced PM regeneration process has been started. In this case, the PM trapped in the interior of the fine pores 10d and in the neighborhood of the fine pores 10d has been oxidized and removed, while the PM trapped in the region distant from the fine pores 10d (namely, in the region near the center in the flow passage 10a) in remaining without being oxidized.

As per the above, the PM trapped in the interior of the fine pores 10d or in the neighborhood of the fine pores 10d is oxidized more easily than the PM deposited on the surface of the partition wall 10c. Specifically, the PM deposited on the surface of the partition wall 10c is hard to be oxidized unless it is exposed to the atmosphere at a temperature in the range of 600 °C to 700 °C, while the PM trapped in the interior of the fine pores 10d and in the neighborhood of the fine pores 10d is sufficiently oxidized if it is exposed to the atmosphere at a temperature in the range of about 500 °C to 550 °C.

This is because, we consider, the PM trapped in the interior of and in the neighborhood of the fine pores 10d easily receives the oxidation effect of the oxidation catalyst supported on the particulate filter 10, while the PM trapped in the region near the center in the flow passage 10a hardly receives the oxidation effect of the oxidation catalyst.

In this embodiment, the amount of the PM trapped in the interior of the fine pores 10d and in the neighborhood of the fine pores 10d (i.e. in the high oxidation rate region) and the amount of the PM trapped in the flow passages 10a, 10b (i.e. in the low oxidation rate region) are separately determined, and the target filter temperature set in the forced particulate filter regeneration is changed in accordance with the PM trap amounts in the respective regions at the time when the forced particulate filter regeneration process is started.

First, the process of separately determining the PM trap amount in the interior of the fine pores 10d and in the neighborhood of the fine pores 10d (which will be simply described as in the pores 10d hereinafter) and the PM trap amount inside the flow passages 10a, 10b will be described.

The exhaust gas flowing in the particulate filter 10 flows from a flow passage 10a to a flow passage 10b through the fine pores 10d. The cross sectional area of the passages in the fine pores 10d is very small as compared to that of the flow passage 10a, and therefore, the PM contained in the exhaust gas is more likely to be trapped in the fine pores 10d than in the flow passages 10a.

Therefore, as the PM is trapped by the particulate filter 10, the PM contained in the exhaust gas is firstly trapped by the fine pores 10d. Subsequently, after the PM trapping capacity in the fine pores 10d is filled, the PM in the exhaust gas is trapped in the flow passages 10a. This tendency is prominent in the wall-flow type particulate filter as exemplified in this embodiment.

In the wall-flow type particulate filter, after the PM trapping capacity in the fine pores 10d has been filled, the most part of the PM contained in the exhaust gas is trapped in the flow passages 10a, and little of the PM is trapped in the flow passages 10b. Therefore, it is assumed in the following description that all the PM contained in the exhaust gas is trapped in the flow passages 10a after the PM trapping capacity in the fine pores 10d has been filled.

As described above, in the course of PM trapping by the particulate filter 10, the pressure difference across the filter increases with an increase in the PM trap amount of the entire particulate filter 10. However, there is a difference in the increase rate of the pressure difference across the filter between in the course of PM trapping in the fine pores 10d and in the course of PM trapping in the flow passages 10a.

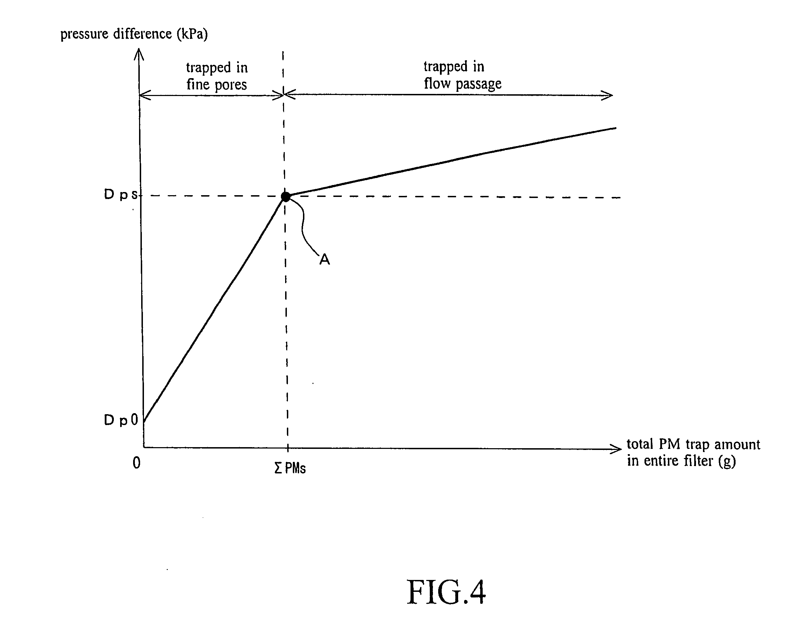

Fig. 4 shows the relationship between the pressure difference across the filter and the total PM trap amount of the entire particulate filter 10. In Fig. 4, Dp0 represents the pressure difference across the filter at the time when the total PM trap amount of the particulate filter 10 is zero, Dps represents the pressure difference across the filter at the time when the PM trapping capacity in the fine pores 10d is filled (which pressure difference will be referred to as the reference pressure difference across the filter hereinafter), and ΣPMs represents the total PM trap amount at the time when the pressure difference across the filter is the reference pressure difference across the filter Dps, namely ΣPMs represents the maximum value of the PM trap amount that can be trapped in the fine pores 10d (which will be referred to as the maximum trap amount in the fine pores).

When the pressure difference across the filter is equal to or lower than the reference pressure difference across the filter Dps (i.e. in the course of PM trapping in the fine pores 10d), the pressure difference across the filter increases steeply. On the other hand, when the pressure difference across the filter is higher than the reference pressure difference across the filter Dps (i.e. in the course of PM trapping in the flow passages 10a), the pressure difference across the filter increases moderately.

Therefore, by determining the reference pressure difference across the filter Dps in advance by experiments and comparing the output signal value of the pressure difference sensor 13 at the time when the forced particulate filter regeneration process is started and the aforementioned reference pressure difference across the filter Dps, it is possible to determine whether PM is trapped only in the fine pores 10d or in both the fine pores 10d and the flow passages 10a.

Specifically, when the output signal value of the pressure difference sensor 13 at the time when the forced particulate filter regeneration is started is equal to or lower than the reference pressure difference across the filter Dps, it can be determined that PM is trapped only in the fine pores 10d, and when the output signal value of the pressure difference sensor 13 is higher than the reference pressure difference across the filter Dps, it can be determined that PM is trapped in both the fine pores 10d and the flow passages 10a.

When the output signal value of the pressure difference sensor 13 is equal to or lower than the reference pressure difference across the filter Dps, the total PM trap amount of the particulate filter 10 can be regarded as the amount of the PM trapped in the fine pores 10d, and it can be considered that the amount of the PM trapped in the flow passages 10a is zero. On the other hand, when the output signal value of the pressure difference sensor 13 is higher than the reference pressure difference across the filter Dps, it can be considered that the amount of the PM trapped in the fine pores 10d is equal to the maximum trap amount in the fine pores ΣPMs, and the amount of the PM trapped in the flow passages 10a is equal to the amount obtained by subtracting the maximum trap amount in the fine pores ΣPMs from the total PM trap amount.

Even while the forced PM regeneration process is not executed, the exhaust gas temperature sometimes rises up to or beyond 500 °C, if the internal combustion engine 1 is operated at high load. In such cases, since the PM trapped in the particulate filter 10 is oxidized, the PM trap amount needs to be subjected to a reduction process.

For example, in the case where the exhaust gas temperature is equal to or higher than the temperature at which the PM in the fine pores 10d can be oxidized and lower than the temperature at which the PM in the flow passaged 10a can be oxidized, only the PM in the fine pores 10d is oxidized, but the PM in the flow passages 10a is not oxidized. Accordingly, the ECU 14 performs the reduction process only on the PM trap amount in the fine pores 10d.

In the case where the exhaust gas temperature is equal to or higher than the temperature at which the PM in the flow passages 10a can be oxidized, both the PM in the fine pores 10d and the PM in the flow passages 10a is oxidized. Accordingly, the ECU 14 performs the reduction process on both the PM trap amount in the fine pores 10d and the PM trap amount in the flow passages 10a.

In connection with this, in view of the fact that the oxidation rate of the PM in the fine pores 10d is higher than that of the PM in the flow passages 10a, the reduction value is made larger in the reduction performed on the PM trap amount in the fine pores 10d than in the reduction performed on the PM trap amount in the flow passages 10a.

After determining the trap amount in the respective regions at the time when the forced particulate filter regeneration process is started, the ECU 14 sets a target filter temperature based on the PM trap amount in the fine pores 10d and the PM trap amount in the flow passages 10a.

In the case, for example, where the PM trap amount in the fine pores 10d is large and the PM trap amount in the flow passages 10a is small, it is possible to regenerate the PM trapping capacity of the particulate filter 10 to a necessary and sufficient degree by oxidizing and removing only the PM in the fine pores 10d. Therefore, when the PM trap amount in the fine pores 10d is large and the PM trap amount in the flow passages 10a is small, the ECU 14 sets the target filter temperature to a temperature at which the PM in the fine pores 10d can be oxidized (e.g. a temperature in the range of 500 °C to 550 °C).

In this case, it is possible to regenerate the PM trapping capacity of the particulate filter 10 while keeping the temperature of the particulate filter 10 low. Thus, the temperature of the particulate filter 10 will not be raised to an unnecessarily high temperature. Consequently, it is possible to extend the usable life of the particulate filter 10 and to reduce the consumption of fuel required for raising the temperature of the particulate filter 10.

When the PM trap amount in the flow passages 10a has become relatively large, the ECU 14 increase the target filter temperature to a temperature at which the PM in the flow passages 10a can be oxidized (e.g. a temperature in the range of 600 °C to 700 °C).

In this case, the PM trapped in the flow passages 10a as well as the PM trapped in the fine pores 10d is oxidized, and therefore substantially all of the PM trapped in the particulate filter 10 can be oxidized and removed.

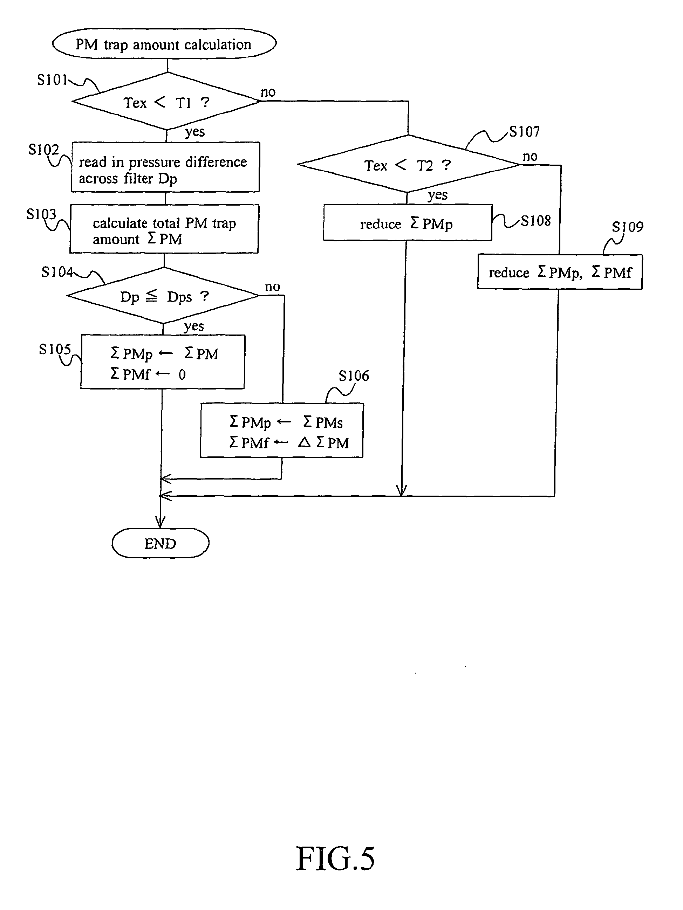

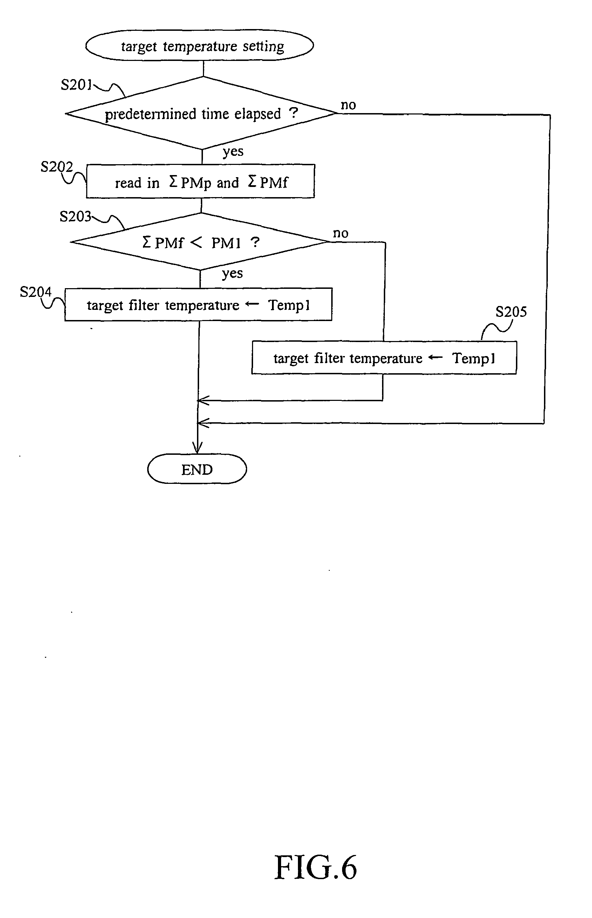

In the following, the PM regeneration control in this embodiment will be described with reference to Figs. 5 and 6. Fig. 5 is a flow chart of a routine for calculating the PM trap amount of the particulate filter 10. Fig. 6 is a flow chart of a routine for setting a target filter temperature in the forced particulate filter regeneration process. These routines are stored in advance in the ROM of the ECU 14 and executed repeatedly by the ECU 14 at predetermined time intervals.

Firstly in step S101 in the routine shown in Fig. 5, the ECU 14 makes a determination as to whether or not the output signal value Tex of the exhaust gas temperature sensor 12 is lower than a first temperature T1. The first temperature T1 is the lower limit of temperatures at which the PM trapped in the fine pores 10d can be oxidized.

If the questioning said step S101 is answered in the affirmative, the ECU 14 reads in the output signal value Dp of the pressure difference sensor 13 (i.e. the pressure difference across the filter) in step S102.

In step S103, the ECU 14 calculates the total PM trap amount ΣPM of the particulate filter 10 based on the pressure difference across the filter Dp read in said step S102 and a map like that shown in Fig. 4.

In step S104, the ECU 14 makes a determination as to whether or not the pressure difference across the filter Dp read in said step S102 is equal to or lower than the reference pressure difference across the filter DPs.

If the question in said step S104 is answered in the affirmative, the ECU 14 advances to step S105, where the ECU 14 sets the total PM trap amount ΣPM calculated in said step S103 as the amount ΣPMp trapped in the fine pores 10d (which will be referred to as the trap amount in the fine pores hereinafter) and sets the amount of the PM trapped in the flow passages 10a ΣPMf (which will be referred to as the trap amount in the flow passages hereinafter) to zero.

If the question in said step S104 is answered in the negative, the ECU 14 advances to step S106, where the ECU 14 sets the PM trap amount ΣPM corresponding to the reference pressure difference across the filter Dps (= the maximum trap amount in the fine pores ΣPMs) as the trap amount in the fine pores ΣPMp and sets the amount ΔΣPM obtained by subtracting the maximum trap amount in the fine pores ΣPMs from the total PM trap amount ΣPM calculated in said step S103 (ΔΣPM = ΣPM - ΣPMs) as the trap amount in the flow passages ΣPMf.

On the other hand, if the question in said step S101 is answered in the negative (Tex ≥ T1), the ECU 14 advances to step S107, where the ECU 14 makes a determination as to whether or not the exhaust gas temperature Tex is lower than a second temperature T2. The second temperature T2 is the lower limit value of temperatures at which the PM trapped in the flow passages 10a can be oxidized.

If the question in said step S107 is answered in the affirmative (Tex < T2), the ECU 14 advances to step S108, where the ECU 14 performs a reduction process on the trap amount in the fine pores ΣPMp. In that process, the reduction amount may be determined using as a parameter the exhaust gas temperature Tex, since the amount of the PM oxidized per unit time changes depending on the exhaust gas temperature Tex.

If the question in said step S107 is answered in the negative (Tex ≥ T2), the ECU 14 advances to step S109, where the ECU 14 performs a reduction process on both the trap amount in the fine pores ΣPMp and the trap amount in the flow passages ΣPMf. In that process, the reduction amount for the trap amount in the flow passage ΣPMf is set smaller than the reduction amount for the trap amount in the fine pores ΣPMp.

In the routine shown in Fig. 6, firstly in step S201, the ECU 14 makes a determination as to whether or not the time elapsed since the latest execution of the forced regeneration process is equal to or longer than a predetermined time.

If the question in said step S201 is answered in the negative, the ECU 14 once terminates execution of this routine. On the other hand, if the question in said step S201 is answered in the affirmative, the ECU advances to step S202.

In step S202, the ECU 14 reads in the latest trap amount in the fine pores ΣPMp and the latest trap amount in the flow passages ΣPMf obtained in the above described routine shown in Fig. 5.

In said step S203, a determination is made as to whether or not the trap amount in the flow passages ΣPMf is smaller than a predetermined amount PM1. The predetermined amount PM1 may be set in such a way that the PM trapping capacity of the particulate filter 10 is not filled even if the internal combustion engine 1 is operated for a predetermined period of time in the state in which said predetermined amount PM1 of PM is remaining in the flow passages 10a of the particulate filter 10. In this embodiment, the predetermined amount PM1 is set to zero.

If the question in said step S203 is answered in the affirmative, the ECU 14 advances to step S204, where the ECU 14 sets the target filter temperature in the forced PM regeneration process to a first target filter temperature Temp 1. The first target filter temperature Temp 1 is a temperature at which the PM trapped in the fine pores 10d can be oxidized. For example, it is set to a temperature in the range of about 500 °C to 550 °C.

If the target filter temperature is set as low as the first target filter temperature Temp 1, the PM trapped in the flow passages 10a is scarcely oxidized and removed, while the PM trapped in the fine pores 10d is oxidized and removed. However, since the trap amount in the flow passages ΣPMf is zero, removal of the PM trapped in the fine pores 10d means achievement of regeneration of the PM trapping capacity of the particulate filter 10.

Furthermore, when the target filter temperature is set as low as the first target filter temperature Temp1, the particulate filter 10 will not be exposed to unnecessarily hot atmosphere. Consequently, it is possible to extend the usable life of the particulate filter 10 and to reduce the consumption of fuel required for raising the temperature of the particulate filter 10.

The above described forced particulate filter regeneration may be performed till the trap amount in the fine pores ΣPMp becomes zero. In that case, the ECU 14 executes the above mentioned PM trap amount calculation routine shown in Fig. 5 even while the forced particulate filter regeneration process is executed, and the forced particulate filter regeneration process should be terminated at the time when the trap amount in the fine pores ΣPMp calculated by the PM trap amount calculation routine becomes zero.

On the other hand, if the question in said step S203 is answered in the negative, the ECU 14 advances to step S205, where the ECU 14 sets the target filter temperature to a second target filter temperature Temp2 that is higher than the first target filter temperature Temp1. The second target filter temperature Temp2 is a temperature at which the PM trapped in the flow passages 10a can be oxidized, and it is set, for example, to a temperature in the range of about 600 °C to 700 °C.

If the target temperature is set as high as the second target filter temperature Temp2, the PM trapped in the flow passages 10a, as well as the PM trapped in the fine pores 10d, is oxidized and removed. Consequently, it is possible to regenerate the PM trapping capacity of the particulate filter 10 excellently.

The above described forced particulate filter regeneration process may be performed until the trap amount in the fine pores ΣPMp and the trap amount in the flow passages ΣPMf become zero. In that case, the ECU 14 executes the above mentioned PM trap amount calculation routine shown in Fig. 5 even while the forced particulate filter regeneration process is executed, and the forced particulate filter regeneration process should be terminated at the time when the trap amount in the fine pores ΣPMp and trap amount in the flow passages ΣPMf calculated by the PM trap amount calculation routine become zero.

As per the above, with execution of the routines shown in Figs. 5 and 6 by the ECU 14 in the exhaust gas purification apparatus for an internal combustion engine in which the forced particulate filter regeneration process is executed at regular time intervals, it is possible to determine the PM trap amount in the particulate filter 10 on a region-by-region basis for regions having different PM oxidation rates, and it is also possible to set an optimum target filter temperature in accordance the PM trap amounts in the respective regions.

As a result, the particulate filter 10 is not exposed to unnecessarily high temperatures, and therefore it is possible to extend the usable life of the particulate filter 10 and to reduce the consumption of fuel required for raising the temperature of the particulate filter 10.

### (Second Embodiment)

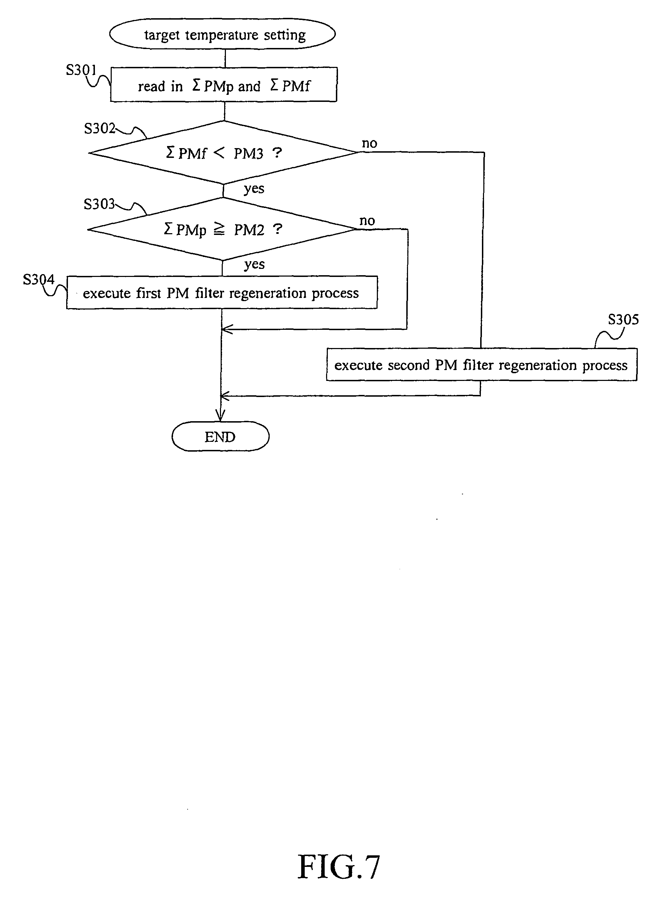

Next, a second embodiment of the present invention will be described with reference to Fig. 7. Here, the description will be directed what is different from the first embodiment, and similar descriptions will be omitted.

In the case of the above-described first embodiment, the present invention is applied to an exhaust gas purification apparatus for an internal combustion engine in which the forced PM regeneration process is performed at predetermined intervals. In contrast, in the embodiment described in the following, the present invention is applied to an exhaust gas purification apparatus for an internal combustion engine in which the forced PM regeneration process is performed when the PM trap amount in the particulate filter becomes equal to or larger than a predetermined amount.

In this case, the ECU 14 determines the trap amount in the fine pores ΣPMp and the trap amount in the flow passages ΣPMf in a similar manner as in the above described first embodiment and executes the forced particulate filter regeneration process when the trap amount in the fine pores ΣPMp becomes equal to or larger than a first predetermined amount PM2 or when the trap amount in the flow passages ΣPMf becomes equal to or larger than a second predetermined amount PM3.

In the case where the forced particulate filter regeneration process is executed on condition that the trap amount in the fine pores ΣPMp becomes equal to or larger than the first predetermined amount PM2, the ECU 14 executes the forced particulate filter regeneration process while setting the target filter temperature to the first target filter temperature Temp1. (This process will be hereinafter referred to as the first forced particulate filter regeneration process). In the case where the forced particulate filter regeneration process is executed on condition that the trap amount in the flow passages ΣPMf becomes equal to or larger than the second predetermined amount PM3, the ECU 14 executes the forced particulate filter regeneration process while setting the target filter temperature to the second target filter temperature Temp2. (This process will be hereinafter referred to as the second forced particulate filter regeneration.)

The above mentioned first predetermined amount PM2 is equal to the maximum amount of the PM trap amount in the fine pores ΣPMp or the maximum trap amount in the fine pores ΣPMs. The above mentioned second predetermined amount PM3 is an amount that is set in such a way that if the internal combustion engine 1 is operated in the state in which said second predetermined amount PM3 of PM is remaining in the flow passages 10a, 10b of the particulate filter 10, the back pressure does not become excessively high, and if the second predetermined amount PM3 of PM is oxidized simultaneously when shift from high load running to deceleration running occurs, the temperature of the particulate filter 10 does not become excessively high.

In the following, the PM regeneration control in this embodiment will be described with reference to Fig. 7. Fig. 7 is a flow chart of a particulate filter regeneration control routine. This particulate filter regeneration control routine is stored in advance in the ROM of the ECU 14 and executed repeatedly by the ECU 14 at regular time intervals.

In the PM regeneration control routine, firstly in step S301, the ECU 14 reads in the trap amount in the fine pores ΣPMp and the trap amount in the flow passages ΣPMf.

In step S302, the ECU 14 makes a determination as to whether or not said trap amount in the flow passages ΣPMf is smaller than the second predetermined amount PM3.

If the question in said step S302 is answered in the affirmative, the ECU 14 advances to step S303. In step S303, the ECU 14 makes a determination as to whether or not the trap amount in the fine pores ΣPMp is equal to or lager than the first predetermined amount PM2.

If the question in said step S303 is answered in the negative, the ECU 14 once terminates execution of this routine. If the question in said step S303 is answered in the affirmative, the ECU 14 advances to step S304. In step S304, the ECU 14 executes the above described first particulate filter regeneration process.

In this case, since the temperature of the particulate filter 10 can be suppressed to the first target filter temperature Temp1, the PM trapped in the fine pores 10d is oxidized reasonably, but the PM trapped in the flow passages 10a is scarcely oxidized. However, a significant decrease in the efficiency of regeneration of the particulate filter 10 does not occur, since the trap amount in the flow passages ΣPMf is sufficiently small. Therefore, it is possible to regenerate the PM trapping capacity of the particulate filter 10 to a necessary and sufficient degree without exposing the particulate filter 10 to unnecessarily high temperatures.

If the question in said step S302 is answered in the negative, the ECU 14 advances to step S305. In step S305, the ECU 14 executes the second particulate filter regeneration process regardless of the trap amount in the fine pores ΣPMp.

In this case, since the temperature of the particulate filter 10 is raised to the second target filter temperature Temp2, the PM trapped in the fine pores 10d and the PM trapped in the flow passages 10a are oxidized and removed.

According to the above described second embodiment, advantageous effects the same as those of the above described first embodiment are achieved in an exhaust gas purification apparatus for an internal combustion engine in which the forced particulate filter regeneration is executed on condition that the PM trap amount becomes equal to or larger than a predetermined amount.

## Claims

1. An exhaust gas purification apparatus for an internal combustion engine (1) comprising:
a particulate filter(10) of a wall type, provided in an exhaust passage of the internal combustion engine and having a catalyst having an oxidizing ability;
regeneration means (11, 14) for performing a forced particulate filter regeneration process to oxidize and remove PM trapped in said particulate filter by raising the temperature of said particulate filter to a target filter temperature; and
trap amount calculation means (13, 14) for calculating the amount of PM trapped in said particulate filter on a region-by-region basis for regions having different particulate oxidation rates; wherein said particulate filter has a porous base member, said region (10c, 10d) in which the oxidation rate is high includes the interior of pores in said base member and the surface of said base member in the neighborhood of the pores, and
a region (10a) in which an oxidation rate is low includes a region distant from the fine pores;
**characterized by**
regeneration temperature control means (12, 14) for making a correction to lower said target filter temperature, wherein the larger the trap amount in a region (10c, 10d) in which the oxidation rate is high and the smaller the trap amount in said region (10a) in which the oxidation rate is low at the time of starting execution of said forced particulate filter regeneration process the lower the target filter temperature is made.

2. An exhaust gas purification apparatus for an internal combustion engine according to claim 1, wherein when PM is not trapped in the region (10a) in which the oxidation rate is low, said regeneration temperature control means (12, 14) sets said target filter temperature to a first target filter temperature, and when PM is trapped in the region (10a) in which the oxidation rate is low, said regeneration temperature control means sets said target filter temperature to a second target filter temperature that is higher than said first target filter temperature.

3. An exhaust gas purification apparatus for an internal combustion engine according to claim 1 or 2, wherein in performing reduction on the trap amount in said region in which the oxidation rate is high, said trap amount calculation means makes the reduction amount larger than that in performing reduction on the trap amount in said region in which the oxidation rate is low.

## Patentansprüche

1. Abgasreinigungsvorrichtung für eine Brennkraftmaschine (1) mit :
einem Partikelfilter (10) einer Wandbauart, der in einem Abgasdurchtritt der Brennkraftmaschine bereit gestellt ist und einen Katalysator aufweist, der einen Oxidierungsfähigkeit aufweist;
einem Regenerierungsmittel (11, 14) zum Durchführen eines erzwungenen Partikelfilterregenerierungsprozesses, um in dem Partikelfilter gefangene PM durch das Erhöhen der Temperatur des Partikelfilters auf eine Sollfiltertemperatur zu oxidieren und zu entfernen; und
einem Fangmengenberechnungsmittel (13, 14) zum Berechnen der Menge der PM, die in den Partikelfilter gefangen sind, auf einer Bereichum-Bereichbasis für Bereiche, die verschiedene Partikeloxidationsraten aufweisen; wobei der Partikelfilter ein poröses Grundelement aufweist, der Bereich (10c, 10d), in dem die Oxidationsrate hoch ist, das Innere der Poren in dem Grundelement und die Oberfläche des Grundelements in der Nachbarschaft der Poren hat, und
ein Bereich (10a), in dem eine Oxidationsrate niedrig ist, einen von den Poren entfernten Bereich hat;
**gekennzeichnet durch**
ein Regenerierungstemperatursteuermittel (12, 14) zum Durchführen einer Korrektur zum Absenken der Sollfiltertemperatur, wobei je größer die Fangmenge in einem Bereich (10c, 10d) ist, in dem die Oxidationsrate hoch ist, und je kleiner die Fangmenge in dem Bereich (10a) ist, in dem die Oxidationsrate niedrig ist, zu der Zeit des Beginns der Ausführung des erzwungenen Partikelfilterregenerationsprozesses ist, die Sollfiltertemperatur desto niedriger gemacht wird.

2. Abgasreinigungsvorrichtung für eine Brennkraftmaschine nach Anspruch 1, wobei, wenn PM nicht in dem Bereich (10a) gefangen sind, in dem die Oxidationsrate niedrig ist, das Regenerierungstemperatursteuermittel (12, 14) die Sollfiltertemperatur auf eine erste Sollfiltertemperatur einstellt, und wenn PM in dem Bereich (10a) gefangen ist, in dem die Oxidationsrate niedrig ist, das Regenerationstemperatursteuermittel die Sollfiltertemperatur auf eine zweite Sollfiltertemperatur einstellt, die höher als die erste Sollfiltertemperatur ist.

3. Abgasreinigungsvorrichtung für eine Brennkraftmaschine nach Anspruch 1 oder 2, wobei im Durchführen der Reduktion der Fangmenge in dem Bereich, in dem die Oxidationsrate hoch ist, das Fangmengenberechnungsmittel die Reduktionsmenge größer macht als in dem Durchführen der Reduktion an der Fangmenge in dem Bereich, in dem die Oxidationsrate niedrig ist.

## Revendications

1. Appareil de purification de gaz d'échappement pour un moteur à combustion interne (1) comprenant :
un filtre à particules (10) du type à paroi, pourvu dans un passage d'échappement du moteur à combustion interne et ayant un catalyseur avec un pouvoir oxydant ;
un moyen de régénération (11, 14) permettant d'exécuter un processus de régénération forcée du filtre à particules pour oxyder et éliminer la matière particulaire piégée dans ledit filtre à particules en élevant la température dudit filtre à particules à une température cible du filtre ; et
un moyen (13, 14) de calcul de quantité de piège permettant de calculer la quantité de matière particulaire piégée dans ledit filtre à particules région par région pour des régions ayant des taux différents d'oxydation particulaire ; où ledit filtre à particules possède un élément de base poreux, ladite région (10c, 10d) dans laquelle le taux d'oxydation est élevé comporte l'intérieur de pores dans ledit élément de base et la surface dudit élément de base aux alentours des pores, et
une région (10a) dans laquelle un taux d'oxydation est faible comporte une région écartée des pores fins ;
**caractérisé par**
un moyen (12, 14) de régulation de température de régénération permettant d'effectuer une correction pour baisser ladite température cible du filtre, où plus la quantité de piège dans une région (10c, 10d) où le taux d'oxydation est élevé, est grande, plus la quantité de piège dans ladite région (10a) où le taux d'oxydation est faible, au moment de commencer l'exécution dudit processus de régénération forcée du filtre à particules, est petite, plus la température cible du filtre est diminuée.

2. Appareil de purification de gaz d'échappement pour un moteur à combustion interne selon la revendication 1, dans lequel, lorsque la matière particulaire n'est pas piégée dans la région (10a) où le taux d'oxydation est faible, ledit moyen (12, 14) de régulation de température de régénération règle ladite température cible du filtre à une première température cible du filtre, et lorsque la matière première est piégée dans la région (10a) où le taux d'oxydation est faible, ledit moyen de régulation de température de régénération règle ladite température cible du filtre à une deuxième température cible du filtre qui est plus élevée que ladite première température cible du filtre.

3. Appareil de purification de gaz d'échappement pour un moteur à combustion interne selon la revendication 1 ou 2, dans lequel, lorsqu'on effectue la réduction sur la quantité de piège dans ladite région où le taux d'oxydation est élevé, ledit moyen de calcul de quantité de piège rend la quantité de réduction plus grande que lorsqu'on effectue la réduction sur la quantité de piège dans ladite région où le taux d'oxydation est faible.
